# EUROPÄISCHE PATENTSCHRIFT

(11) **EP 3 662 181 B1**
(45) Veröffentlichungstag und Bekanntmachung des Hinweises auf die Patenterteilung: **12.01.2022**
(21) Anmeldenummer: 18737864.1
(22) Anmeldetag: 02.07.2018
(51) Int. Cl.: F16H 57/04, H02K 9/19, B60K 1/00

(54) **ÖLVERSORGUNGSANORDNUNG EINES FAHRZEUGES MIT EINER ELEKTRISCHEN MASCHINE**
OIL SUPPLY ARRANGEMENT OF A VEHICLE WITH AN ELECTRIC MACHINE
ENSEMBLE D'ALIMENTATION EN HUILE D'UN VÉHICULE COMPRENANT UNE MACHINE ÉLECTRIQUE

(30) Priorität: 03.08.2017 DE 102017213513
(43) Veröffentlichungstag der Anmeldung: 10.06.2020
(73) Patentinhaber: ZF Friedrichshafen AG, 88046 Friedrichshafen (DE)
(72) Erfinder: WEHLEN, Timo, 88045 Friedrichshafen (DE); REH, Ingrid, 84453 Mühldorf am Inn (DE); KEHR, Ulrich, 88069 Tettnang (DE); RIEGER, Wolfgang, 88048 Friedrichshafen (DE); SCHARR, Stephan, 88048 Friedrichshafen (DE); LÜBKE, Eckhardt, 88048 Friedrichshafen (DE); SCHIESS, Marc, 78355 Hohenfels (DE); DICHTL, Florian, 94154 Neukirchen vorm Wald (DE)
(74) Vertreter: ZF Friedrichshafen AG
(86) Internationale Anmeldenummer: PCT/EP2018/067762
(87) Internationale Veröffentlichungsnummer: WO 2019/025097

(56) Entgegenhaltungen:
- WO-A1-2015/119052
- DE-T5-112012 003 064
- DE-T5-112015 000 947
- JP-A- 2008 132 941
- US-A1- 2008 128 208
- US-A1- 2009 107 769
- US-A1- 2014 339 934

## Beschreibung

Die vorliegende Erfindung betrifft ein Fahrzeug mit einer Ölversorgungsanordnung mit einer elektrischen Maschine in einem Gehäuse mit zumindest einem Ölvolumen gemäß der im Oberbegriff des Patentanspruches 1 näher definierten Art.

Aus der Fahrzeugtechnik sind beispielsweise Hybridfahrzeuge oder elektrisch angetriebene Fahrzeuge bekannt, bei denen neben einem Verbrennungsmotor zusätzlich oder ausschließlich eine elektrische Maschine als Antrieb vorgesehen ist. Die elektrische Maschine ist in einem Gehäuse angeordnet, welches ein Ölvolumen bzw. einen Öl-Nassraum zum Schmieren und Kühlen aufweist. Das Gehäuse der elektrischen Maschine ist üblicherweise an ein Getriebegehäuse angeflanscht und wird von diesem mit Öl versorgt.

Bei einer im Ölvolumen angeordneten elektrischen Maschine besteht die Gefahr, dass bei entsprechender Neigung des Fahrzeuges oder bei entsprechender Beschleunigung der Ölspiegel im Ölvolumen derart ansteigt, dass Bauteile der elektrischen Maschine in das Ölvolumen eintauchen, die normalerweise nicht mit dem Öl in Berührung kommen dürfen. Beispielsweise kann der Rotor der elektrischen Maschine in unerwünschter Weise mit Öl benetzt werden und Öl in den Luftspalt zwischen Rotor und Stator eindringen, welches die Schleppmomente in nachteiliger Weise erhöht. Zudem kann sich das Öl hierbei derart erwärmen, dass nicht temperaturfeste Öladditive zerstört werden.

Im waagerechten bzw. quasi statischen Betriebszustand des Fahrzeuges wird der Ölspiegel auf ein möglichst geringes Niveau eingestellt, damit die vorgenannten Nachteile vermieden werden. Gleichzeitig jedoch ist ein Ansaugen der Ölpumpe unter Steigung, Neigung und Beschleunigung zu gewährleisten, damit die Kühl- und Schmierfunktion aufrechterhalten werden kann. Insofern ist das Ölvolumen nicht beliebig reduzierbar.

Beispielsweise aus der Druckschrift DE 11 2013 003 975 T5 ist ein flüssigkeitsgekühlter Elektromotor bekannt. Bei dem Elektromotor ist ein Kühlmittelsammelbehälter vorgesehen, der am Unterboden des Gehäuses angeflanscht ist. Dadurch wird verhindert, dass der Ölspiegel bei Beschleunigungen oder Neigungen unerwünscht ansteigt. Aufgrund des separaten Behälters wird gleichzeitig die Ölansaugung gewährleistet. Es hat sich jedoch gezeigt, dass für den am Unterboden des Gehäuses angeordneten Behälter zusätzlicher Bauraum benötigt wird, der den Bauraumbedarf nachteiliger Weise erhöht.

Mit der US 2014/0339934 A1 ist eine Ölversorgungsanordnung eines Fahrzeuges der eingangs genannten Art bekannt geworden. Die Anordnung umfasst eine elektrische Maschine in einem Gehäuse mit einem Ölvolumen, welches mit einem Ölvolumen eines Getriebegehäuses des Fahrzeuges zur Ölversorgung verbunden ist und wobei das Ölvolumen der elektrischen Maschine in zwei Ölversorgungsräume zum Ausgleich des Ölspiegels in dem Gehäuse unterteilt ist.

Die DE 11 2012 003 064 T5 offenbart gattungsgemäße Fahrzeugantriebsvorrichtung mit einer längs der Fahrzeugerstreckung eingebauten Elektromaschine. Zur Gewährleistung einer Ölversorgung sind an den Gehäusestirnseiten an einem Innenraum der Elektromaschine zwei miteinander kommunizierende Ölausgleichsräume vorgesehen, welche auf einem unterschiedlichen Höhenniveau und teilweise merklich geodätisch unterhalb des Stators der Maschine angeordnet sind. Eine hinsichtlich der Ausbildung der Ölausgleichsräume zu dem vorgenannten Dokument technisch vergleichbare Anordnung mit Ausgleichsräumen wird mit mit der DE 11 2015 000 947 T5 offenbart.

Mit der US 2008/0128208 A1 ist eine Antriebsanordnung mit einer quer zur Längserstreckung des Fahrzeugs und damit quer zu einer Fahrtrichtung angeordneten Elektromaschine bekannt geworden. Dabei sind zur Ölversorgung zwei zumindest oberhalb der Rotorwelle ausgebildete Ölausgleichsräume vorgesehen, welche teilweise axial außerhalb der Elektromaschine ausgebildet sind.

Der vorliegenden Erfindung liegt die Aufgabe zugrunde, ein Fahrzeug mit einer Ölversorgungsanordnung der eingangs beschriebenen Gattung vorzuschlagen, bei der einerseits eine optimale Ölversorgung auch bei Neigung oder Beschleunigung des Fahrzeuges gewährleistet ist und andererseits ein möglichst geringer Bauraumbedarf besteht.

Diese Aufgabe wird erfindungsgemäß durch die Merkmale des Patentanspruches 1 gelöst, wobei sich vorteilhafte und beanspruchte Weiterbildungen aus den Unteransprüchen ergeben.

Somit wird ein Fahrzeug mit einer Ölversorgungsanordnung mit einer elektrischen Maschine in einem Gehäuse mit zumindest einem Ölvolumen vorgeschlagen, welches mit einem Ölvolumen eines Getriebegehäuses zur Ölversorgung verbunden ist. Um eine optimale Versorgung auch bei Neigung oder Beschleunigung des Fahrzeuges zu gewährleisten und zudem einen möglichst geringen Bauraum zu beanspruchen, ist vorgesehen, dass das Ölvolumen der elektrischen Maschine in zumindest zwei Ölversorgungsräume zum Ausgleich des Ölspiegels in dem Gehäuse unterteilt ist, wobei ein erster Ölversorgungsraum an einer der Fahrtrichtung des Fahrzeuges zugewandten Seite des Gehäuses und ein zweiter Ölversorgungsraum an einer der Fahrtrichtung des Fahrzeuges abgewandten Seite des Gehäuses angeordnet ist. Die in dem Gehäuse der elektrischen Maschine vorgesehenen Ölversorgungsräume sind zum Ausgleich des Ölspiegels in dem Gehäuse der elektrischen Maschine zum einen mit dem Ölvolumen des Getriebegehäuses verbunden und zum anderen derart angeordnet, dass der in dem einen Ölversorgungsraum zum Beispiel aufgrund einer Neigung oder Beschleunigung des Fahrzeuges ansteigende Ölspiegel beispielsweise über das Ölvolumen des Getriebegehäuse mit dem in dem anderen Ölversorgungsraum fallenden Ölspiegel ausgeglichen wird.

Eine besonders bauraumgünstige Anordnung wird dadurch erreicht, dass der erste Ölversorgungsraum und der zweite Ölversorgungsraum parallel zur Rotorachse der elektrischen Maschine in dem Gehäuse verlaufen. Der Rotor der elektrischen Maschine verläuft hierbei quer zur Längsausrichtung des Fahrzeuges, sodass die Ölversorgungsräume einen Ausgleich des Ölspiegels bei Beschleunigung in Längsrichtung bzw. Neigung des Fahrzeuges bezogen auf die Längsausrichtung gewährleistet. Vorzugsweise werden die Versorgungsräume innerhalb des vorhandenen Innenraumes des Gehäuses realisiert.

Da die Rotorachse quer zur Längsrichtung des Fahrzeuges ausgerichtet ist, können die Ölversorgungsräume jeweils seitlich einander gegenüberliegend unterhalb der Rotorachse angeordnet werden. Auf diese Weise kann zur Ausbildung der Ölversorgungsräume am Gehäuse ein bisher ungenutzter Raumbereich verwendet werden, der hinsichtlich der Unterbringung der weiteren Komponenten keine Einschränkungen mit sich bringt und auch hinsichtlich der Bodenfreiheit des Fahrzeugs unkritisch ist.

Eine konstruktiv besonders einfache Ausführung der Ölversorgungsanordnung des Fahrzeugs kann dadurch realisiert werden, dass der erste Ölversorgungsraum und der zweite Ölversorgungsraum jeweils kanalförmig über die zum Beispiel gesamte Breite des Gehäuses verlaufen und unterhalb des Blechpaketes des Stators abgeschlossen ist. Auf diese Weise wird sichergestellt, dass kein Öl auch bei Neigung und Beschleunigung des Fahrzeuges in den Luftspalt der elektrischen Maschine eindringen kann, ohne das Gehäuse am Bodenbereich zu erweitern.

Im Rahmen einer vorteilhaften Weiterbildung der vorliegenden Erfindung kann vorgesehen sein, dass der erste Ölversorgungsraum und der zweite Ölversorgungsraum durch einen ersten Wickelkopfraum der elektrischen Maschine und einen zweiten Wickelkopfraum der elektrischen Maschine strömungsmäßig miteinander verbunden sind. Auf diese Weise kann bei Neigung oder Beschleunigung des Fahrzeuges ein schnellerer Ausgleich des Ölspiegels direkt über die beiden Wickelkopfräume bei den beiden Ölversorgungsräumen realisiert werden.

Um beispielsweise auch bei auftretenden Querkräften aufgrund von Querneigungen des Fahrzeuges oder Querbeschleunigung des Fahrzeuges einen entsprechenden Ausgleich des Ölspiegels in dem Gehäuse der elektrischen Maschine zu realisieren, kann im Rahmen einer nächsten Weiterbildung vorgesehen sein, dass von den beiden Wickelkopfräumen ein Wickelkopfraum an der dem Getriebegehäuse abgewandten Seite und ein Wickelkopfraum an der dem Getriebegehäuse zugewandten Seite des Gehäuses vorgesehen ist, wobei zumindest einer der Wickelkopfräume strömungsmäßig mit dem Ölvolumen des Getriebegehäuse zum Ausgleich des Ölspiegels verbunden ist.

Die vorliegende Erfindung wird anhand der Zeichnungen weiter erläutert. Es zeigen:
- Figur 1: eine schematische Draufsicht auf eine Ölversorgungsanordnung bei einem Fahrzeug;
- Figur 2: eine schematische Seitenansicht gemäß Figur 1; und
- Figur 3: eine schematische Seitenansicht gemäß Figur 1 bei Längsneigung oder Längsbeschleunigung des Fahrzeugs.

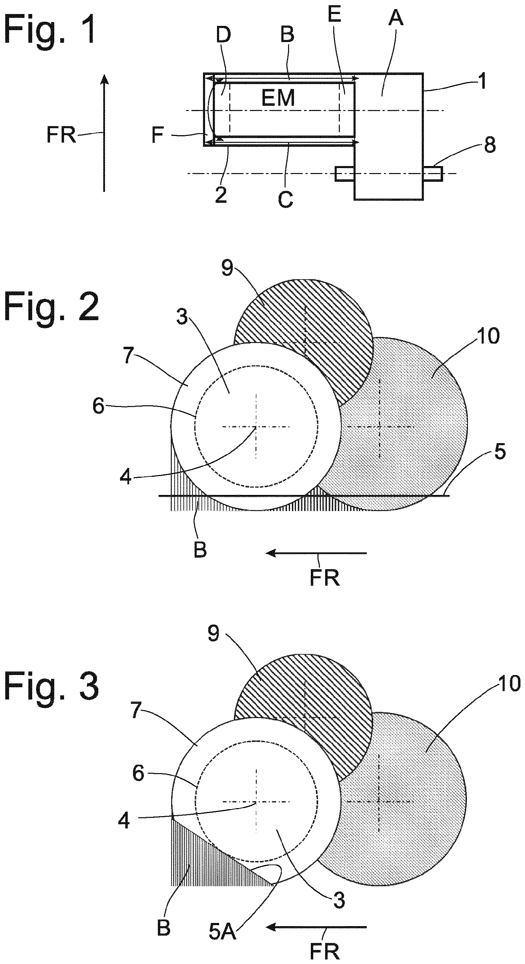

In den Figuren 1 bis 3 sind verschiedene Ansichten einer Ölversorgungsanordnung bei einem Fahrzeug, insbesondere einem Elektro- oder Hybridfahrzeug mit einer elektrisch angetriebenen Achse beispielhaft dargestellt.

Die Ölversorgungsanordnung eines Fahrzeuges mit einer elektrischen Maschine EM in einem Gehäuse 2 umfasst zumindest ein Ölvolumen, welches mit einem Ölvolumen A eines Getriebegehäuse 1 des Fahrzeuges zur Ölversorgung verbunden ist. Um auch bei äußeren Einwirkungen durch Beschleunigung oder Neigung auf das Fahrzeug einen ausgeglichenen Ölspiegel in dem Gehäuse 2 zu gewährleisten, ist vorgesehen, dass das Ölvolumen der elektrischen Maschine EM in zumindest zwei Ölversorgungsräume B, C unterteilt ist, sodass bei äußeren Einwirkungen ein Ausgleich des Ölspiegels in den Gehäusen 1 und 2 sichergestellt ist. Ein erster Ölversorgungsraum B ist vorzugsweise an einer der Fahrtrichtungen FR des Fahrzeuges zugewandten Seite des Gehäuses 2 und ein zweiter Ölversorgungsraum C des Gehäuses 2 ist an einer der Fahrtrichtung FR des Fahrzeuges bzw. einem Abtrieb 8 abgewandten Seite des Gehäuses 2 angeordnet. Die Lage der Ölversorgungsräume B, C ist beispielhaft in Figur 1 verdeutlicht.

Unter Neigung bzw. Beschleunigung in Richtung des ersten Ölversorgungsraumes B kann das zumindest teilweise in den zweiten Ölversorgungsraum C und/oder in das Ölvolumen A des Getriebegehäuses 1 ausweichen, welches durch entsprechende Pfeile in Figur 1 dargestellt ist, sodass die elektrische Maschine EM weniger stark in das vorhandene Öl eintaucht. Entsprechend wirkt der zweite Ölversorgungsraum C in entgegengesetzter Richtung. Auf diese Weise wird bei einer in die oder gegen die Fahrtrichtung FR des Fahrzeuges vorgesehenen Beschleunigung oder einer entsprechenden Neigung des Fahrzeuges aufgrund der vorgesehenen Ölversorgungsräume B, C ein entsprechender Ausgleich realisiert, sodass der Ölspiegel nicht über ein vorbestimmtes Niveau ansteigt. Das vorbestimmte Niveau wird beispielsweise derart festgelegt, dass Öl nicht in einen Luftspalt 6 zwischen dem Rotor 3 und dem zwischen dem Rotor 3 und dem Stator 7 der elektrischen Maschine EM eintreten kann.

Wenn der erste Ölversorgungsraum B und der zweite Ölversorgungsraum C durch einen ersten Wickelkopfraum D der elektrischen Maschine EM und/oder eine zweiten Wickelkopfraum E der elektrischen Maschine EM strömungsmäßig miteinander verbunden sind, kann in vorteilhafterweise der Ausgleich des Ölspiegels direkt über die Wickelkopfräume D, E erfolgen, ohne dass hierzu das Ölvolumen A in dem Getriebegehäuse 1 verwendet wird. An der dem Getriebegehäuse 1 abgewandten Seite des Gehäuses 2 ist im Ausführungsbeispiel ein Gehäusedeckel vorgesehen, der als weiteren Raum einen Gehäusedeckelraum F der elektrischen Maschine EM ausbilden kann, welcher mit dem dort befindlichen Wickelkopfraum D einen gemeinsamen Raum ausbildet. Vorzugsweise verlaufen die Wickelkopfräume D, E der elektrischen Maschine EM quer zur Rotorachse 4 bzw. parallel zur Längsausrichtung des Fahrzeuges.

Um auch einen Ausgleich unter Neigung bzw. Beschleunigung des Fahrzeuges quer zur Längsrichtung zu ermöglichen, ist der aus dem Gehäusedeckelraum F und dem Wickelkopfraum D gebildete gemeinsamen Raum F, D mit dem ersten Versorgungsraum B und mit dem zweiten Ölversorgungsraum C zum Ausgleich des Ölspiegels verbunden. Während der Neigung kann das Öl durch die Ölversorgungsräume B, C in das Ölvolumen A des Getriebegehäuse 1 strömen.

Die sich ergebenen Ölströme durch die vorgesehenen Ölkanalverbindungen der Ölversorgungsanordnung bei Beschleunigung und Neigung des Fahrzeuges sind beispielhaft in Figur 1 durch entsprechende Pfeile angedeutet.

Der entlang der Rotorachse 3 der elektrischen Maschine EM angebrachte Doppelpfeil soll darauf hinweisen, dass ein Ölstrom zwischen dem Getriebegehäuse 1 und dem Gehäuse 2 der elektrischen Maschine EM, insbesondere dem getriebeseitigen Wickelkopfraum E realisiert wird. Auf diese Weise ist eine strömungsmäßige Verbindung zwischen den Ölversorgungsräumen B, C, den Wickelkopfräumen D, E sowie dem Gehäusedeckelraum F einerseits und dem Ölvolumen A des Getriebegehäuse 1 vorgesehen.

In Figur 2 und 3 sind beispielhaft ein Stirnrad 9 an einer Zwischenwelle und ein Stirnrad 10 an einer Antriebswelle in den Getriebegehäuse 1 beispielhaft dargestellt. Zudem sind die Ölversorgungsräume B, C in einer Seitenansicht dargestellt, aus der deutlich wird, dass die Ölversorgungsräume B, C parallel zur Rotorachse 4 der elektrischen Maschine EM bzw. quer zur Längsausrichtung des Fahrzeuges verlaufen. Um einen entsprechenden Ausgleich des Ölspiegels zu realisieren, ist vorgesehen, dass der erste Ölversorgungsraum B und der zweite Ölversorgungsraum C jeweils seitlich einander gegenüberliegend unterhalb der Rotorachse 4 angeordnet sind. Hierbei verlaufen der erste Ölversorgungsraum B und der zweite Ölversorgungsraum C jeweils kanalförmig über die Breite des Gehäuses 2 und sind unterhalb des Blechpaketes des Stators der elektrischen Maschine EM in dem Gehäuse 2 abgeschlossen. Dadurch wird verhindert, dass die Ölversorgungsräume B, C nicht über den Bodenbereich des Gehäuses 2 hinaus verlaufen, sodass eine besonders bauraumgünstige Anordnung ermöglicht wird. Auf diese Weise kann auf eine bei Automatikgetrieben übliche Ölwanne, die an den Boden des Gehäuse 2 und des Getriebegehäuses 1 angebracht ist, in vorteilhafter Weise verzichtet werden.

Figur 3 zeigt zudem eine in Längsrichtung geneigte Position des Fahrzeuges bzw. eine Beschleunigung in Fahrtrichtung FR, bei der maximal eine Neigung von 35° des Ölspiegels 5A in den Ölversorgungsräumen B, C auftritt, wobei Figur 2 den Ölspiegel 5 in einem statischen Zustand des Fahrzeuges zeigt.

Es ist ohne weiteres möglich, dass die Ölversorgungsräume B, C ein gemeinsames Ölvolumen oder zwei separate Volumina umfassen.

Die Ölversorgungsanordnung realisiert somit ein Kanalsystem insbesondere für elektrische Antriebe oder für Hybridantriebe mit einer elektrischen Maschine EM, die im Öl-Nassraum angeordnet ist, wobei sichergestellt ist, dass kein Öl den Rotor 3 in einer unerwünschten Weise benetzt oder in einer solchen Weise in den Luftspalt 6 eindringt, sodass die Schleppmomente nicht erhöht werden.

### Bezugszeichen

- 1: Getriebegehäuse
- 2: Gehäuse der elektrischen Maschine
- 3: Rotor der elektrischen Maschine
- 4: Rotorachse
- 5: Ölspiegel im statischen Zustand des Fahrzeuges
- 5A: Ölspiegel bei geneigten oder beschleunigten Zustand des Fahrzeuges
- 6: Luftspalt
- 7: Stator
- 8: Abtrieb
- 9: Stirnrad einer Zwischenwelle
- 10: Stirnrad einer Abtriebswelle
- A: Ölvolumen bzw. Ölraum in dem Getriebegehäuse
- B: erster Ölversorgungsraum in dem Gehäuse
- C: zweiter Ölversorgungsraum in den Gehäuse
- D: erster Wickelkopfraum
- E: zweiter Wickelkopfraum
- F: Gehäusedeckelraum
- FR: Fahrtrichtung
- EM: elektrische Maschine

## Patentansprüche

1. Fahrzeug mit einer Ölversorgungsanordnung mit einer elektrischen Maschine (EM) in einem Maschinengehäuse (2) mit zumindest einem Ölvolumen, welches mit einem Ölvolumen (A) eines Getriebegehäuses (1) des Fahrzeuges zur Ölversorgung verbunden ist, wobei das Ölvolumen der elektrischen Maschine (EM) in zumindest zwei Ölversorgungsräume (B, C) zum Ausgleich des Ölspiegels in dem Maschinengehäuse (2) unterteilt ist, wobei ein erster Ölversorgungsraum (B) an einer der Fahrtrichtung (FR) des Fahrzeuges zugewandten Seite des Maschinengehäuses (2) und ein zweiter Ölversorgungsraum (C) an einer der Fahrtrichtung (FR) des Fahrzeuges abgewandten Seite des Maschinengehäuses (2) angeordnet ist,
**dadurch gekennzeichnet,**
**dass** ein Rotor der elektrischen Maschine (EM) quer zur Längsausrichtung des Fahrzeugs verläuft und dass der erste Ölversorgungsraum (B) und der zweite Ölversorgungsraum (C) parallel zu einer Rotorachse des Rotors der elektrischen Maschine (EM) verlaufen und wobei der erste Ölversorgungsraum (B) und der zweite Ölversorgungsraum (C) jeweils seitlich einander gegenüberliegend unterhalb der Rotorachse (4) der elektrischen Maschine (EM) angeordnet sind.

2. Fahrzeug nach Anspruch 1, **dadurch gekennzeichnet, dass** der erste Ölversorgungsraum (B) und der zweite Ölversorgungsraum (C) jeweils kanalförmig über die Breite des Gehäuses (2) verlaufen und unterhalb des Blechpaketes des Stators (7) der elektrischen Maschine (EM) in dem Maschinengehäuse (2) abgeschlossen sind.

3. Fahrzeug nach Anspruch 1 oder 2, **dadurch gekennzeichnet, dass** der erste Ölversorgungsraum (B) und der zweite Ölversorgungsraum (C) durch einen ersten Wickelkopfraum (D) der elektrischen Maschine (EM) und/oder einen zweiten Wickelkopfraum (E) der elektrischen Maschine (EM) strömungsmäßig miteinander verbunden sind, wobei die Wickelkopfräume (D, E) quer zur Rotorachse (4) der elektrischen Maschine (EM) verlaufen.

4. Fahrzeug nach Anspruch 3, **dadurch gekennzeichnet, dass** von den beiden Wickelkopfräumen (D, E) ein Wickelkopfraum (D) an der dem Getriebegehäuse (1) abgewandten Seite und ein Wickelkopfraum (E) an der dem Getriebegehäuse (1) zugewandten Seite des Maschinengehäuses (2) vorgesehen ist, wobei zumindest einer der Wickelkopfräume (D, E) strömungsmäßig mit dem Ölvolumen (A) des Getriebegehäuse (1) zum Ausgleich des Ölspiegels verbunden ist.

## Claims

1. Vehicle having an oil supply arrangement with an electrical machine (EM) in a machine housing (2) with at least one oil volume which is connected to an oil volume
(A) of a transmission housing (1) of the vehicle for supplying oil, wherein the oil volume of the electrical machine (EM) is subdivided into at least two oil supply chambers (B, C) for equalizing the oil level in the machine housing (2), wherein a first oil supply chamber
(B) is arranged on a side of the machine housing (2) facing the direction of travel (FR) of the vehicle and a second oil supply chamber (C) is arranged on a side of the machine housing (2) facing away from the direction of travel (FR) of the vehicle,
**characterized**
**in that** a rotor of the electrical machine (EM) runs transversely to the longitudinal orientation of the vehicle and in that the first oil supply chamber (B) and the second oil supply chamber (C) run parallel to a rotor axis of the rotor of the electrical machine (EM) and wherein the first oil supply chamber (B) and the second oil supply chamber (C) are arranged laterally opposite one another below the rotor axis (4) of the electrical machine (EM).

2. Vehicle according to Claim 1, **characterized in that** the first oil supply chamber (B) and the second oil supply chamber (C) each run in the form of a channel over the width of the housing (2) and are terminated below the laminated core of the stator (7) of the electrical machine (EM) in the machine housing (2).

3. Vehicle according to Claim 1 or 2, **characterized in that** the first oil supply chamber (B) and the second oil supply chamber (C) are flow-connected to one another by a first end winding space (D) of the electrical machine (EM) and/or a second end winding space (E) of the electrical machine (EM), wherein the end winding spaces (D, E) run transversely to the rotor axis (4) of the electrical machine (EM).

4. Vehicle according to Claim 3, **characterized in that**, from amongst the two end winding spaces (D, E), one end winding space (D) is provided on the side facing away from the transmission housing (1) and one end winding space (E) is provided on the side of the machine housing (2) facing the transmission housing (1), wherein at least one of the end winding spaces (D, E) is flow-connected to the oil volume (A) of the transmission housing (1) for equalizing the oil level.

## Revendications

1. Véhicule muni d'un agencement d'alimentation en huile muni d'un moteur électrique (EM) dans un carter de moteur (2) muni d'au moins un volume d'huile, qui est relié à un volume d'huile (A) d'un carter de transmission (1) du véhicule pour l'alimentation en huile, le volume d'huile du moteur électrique (EM) étant divisé en au moins deux chambres d'alimentation en huile (B, C) pour l'égalisation du niveau d'huile dans le carter de moteur (2), une première chambre d'alimentation en huile (B) étant agencée sur un côté du carter de moteur (2) tourné vers le sens de marche (FR) du véhicule et une deuxième chambre d'alimentation en huile (C) étant agencée sur un côté du carter de moteur (2) détourné du sens de marche (FR) du véhicule,
**caractérisé en ce que**
un rotor du moteur électrique (EM) s'étend transversalement à l'orientation longitudinale du véhicule et **en ce que** la première chambre d'alimentation en huile (B) et la deuxième chambre d'alimentation en huile (C) s'étendent parallèlement à un axe de rotor du rotor du moteur électrique (EM) et dans lequel la première chambre d'alimentation en huile (B) et la deuxième chambre d'alimentation en huile (C) sont respectivement agencées latéralement l'une en face de l'autre en dessous de l'axe de rotor (4) du moteur électrique (EM).

2. Véhicule selon la revendication 1, **caractérisé en ce que** la première chambre d'alimentation en huile (B) et la deuxième chambre d'alimentation en huile (C) s'étendent respectivement en forme de canal sur la largeur du carter (2) et se terminent dans le carter de moteur (2) en dessous du paquet de tôles du stator (7) du moteur électrique (EM).

3. Véhicule selon la revendication 1 ou 2, **caractérisé en ce que** la première chambre d'alimentation en huile (B) et la deuxième chambre d'alimentation en huile (C) sont reliées fluidiquement l'une à l'autre par une première chambre de tête de bobine (D) du moteur électrique (EM) et/ou par une deuxième chambre de tête de bobine (E) du moteur électrique (EM), les chambres de tête de bobine (D, E) s'étendant transversalement à l'axe du rotor (4) du moteur électrique (EM).

4. Véhicule selon la revendication 3, **caractérisé en ce que** parmi les deux chambres de tête de bobine (D, E), une chambre de tête de bobine (D) est prévue sur le côté détourné du carter de transmission (1) et une chambre de tête de bobine (E) est prévue sur le côté du carter de moteur (2) tourné vers le carter de transmission (1), au moins une des chambres de tête de bobine (D, E) étant reliée fluidiquement au volume d'huile (A) du carter de transmission (1) pour l'égalisation du niveau d'huile.
